# EUROPEAN PATENT APPLICATION

(11) **EP 1 449 642 A1**
(43) Date of publication of application: **25.08.2004**
(21) Application number: 02802728.2
(22) Date of filing: 08.11.2002
(51) Int. Cl.: B32B 9/00, B32B 3/30, C03C 17/42, C01B 33/12

(54) **ULTRA-WATER-REPELLENT SUBSTRATE**

(30) Priority: 08.11.2001 JP 2001343639; 18.12.2001 JP 2001384104
(71) Applicant: Nippon Sheet Glass Company, Limited, Osaka-shi, Osaka 541-8559 (JP)
(72) Inventor: TERANISHI, Toyoyuki, c/o NIPPON SHEET GLASS CO LTD, Osaka-shi, Osaka 541-8559 (JP)
(74) Representative: Intès, Didier Gérard André
(86) International application number: PCT/JP2002/011638
(87) International publication number: WO 2003/039856

(57) **Abstract**

The present invention provides a super-hydrophobic substrate that includes a substrate; an undercoating film formed on the substrate having minute recesses and projections in its surface; and a hydrophobic film formed on the minute recesses and projections. The surface shape of the hydrophobic film reflects the minute recesses and projections. A contact angle CA and a tumbling angle TA of a water droplet on the surface of the hydrophobic film satisfy relationships: CA ≥ 150° and TA ≤ 15° or 150° > CA ≥ 145° and TA ≤ 5°.

## Description

### Technical field

The present invention relates to super-hydrophobic substrates that are useful for, for example, glass sheets for vehicles.

### Background Art

In order to make the surface of glass sheets or other substrates super hydrophobic, the surface may be provided with minute recesses and projections.

In general, the wettability of solid surfaces depends on the roughness of the surface. That is to say, if the solid surface is hydrophilic, then a rough surface increases its hydrophilicity, and if the solid surface is hydrophobic, then a rough surface increases its hydrophobicity. This phenomenon is particularly pronounced when the surface has a fractal structure, and as a result, fractal surfaces may be so-called super-hydrophobic or super-hydrophilic surfaces, depending on the material of the fractal surface.

It should be noted that a hydrophobic state in which the contact angle of water is greater than 150° is generally referred to as "super-hydrophobic."

For example, (1) JP 6(1994)-25449 A discloses a method in which the surface of a plastic film is provided with fine protrusions by plasma processing, and then a fluorine compound is chemisorbed.

(2) JP 11(1999)-286784 A discloses a method of forming a finely textured structure on a glass surface by applying a processing solution including a polycondensate of a metal alkoxide, metal oxide particles, and a silane compound having a fluoroalkyl group, and then drying the processing solution.

(3) JP 2000-144116 A discloses a hydrophobic film providing a surface with recesses and projections by applying to a substrate an application solution including a polycondensate of trialkoxylsilane, and thermally processing it.

(4) JP 2001-17907 A discloses a method of providing a surface with a fine texture by forming a coating on a substrate by applying a solution including an aluminum compound, and immersing it in warm water.

(5) JP 2001-207123 A discloses a method of forming a layer with micropores of 100 nm to 2 µm average pore diameter by applying to a substrate a solution obtained by adding to a solvent metal alkoxides and a substance having the property of phase splitting with these in the solvent and decomposing, combusting or sublimating at temperatures between room temperature and 700°C, followed by thermal processing.

However, in the methods disclosed in (1), (2) and (5), the thickness and/or the texture of the film is large. Therefore, transmitted light is scattered, and the haze value increases, so that there is the disadvantage that the transparency of the film is low.

Furthermore, in the technologies disclosed in (3) and (5), after the application solution is applied to the substrate, it has to be thermally processed at a high temperature, so that the substrate is limited to materials with high thermal resistance. Furthermore, they necessitate thermal processing.

In the method disclosed in (1), the texture is formed by plasma processing, so that it requires equipment for plasma processing.

In the method disclosed in (4), the texture is formed by immersion in warm water, so that it necessitates equipment for supplying warm water.

In the technologies disclosed in (2), (3), (4) and (5), drying is performed after forming a wet coating film by dip coating, so that irregularities easily appear on the glass edges and the film surface, deteriorating the appearance of the coating.

Furthermore, in the technologies disclosed in (1), (2), (3), (4) and (5), the texture of the film surface has an irregular fractal structure, so that the abrasion resistance of the film becomes poor.

Furthermore, in the technology disclosed in (5), a super-hydrophobic property is disclosed in which the contact angle of 140° or more and the tumbling angle of a 7 mg droplet is 30° or less. However, the conventional technologies such as (1) to (5) do not disclose any example revealing the most suitable range of the contact angle and the tumbling angle for actual use in a glass sheet for vehicles.

In a substrate exhibiting hydrophobicity, for example, the larger the roughness of the surface provided with the texture is, the larger the contact angle of water becomes. When the contact angle exceeds 150°, a super-hydrophobic surface is attained, on which water droplets hardly stay still. It is said that in order to realize such a super-hydrophobic surface, a shape is necessary in which a lot of air is kept between the surface texture and the water drops.

However, there is the problem that with a large texture of more than several hundred nanometers, transmitted light is scattered causing haze, thus damaging transparency, especially when the glass sheet is used for vehicles.

Also, in conventional super-hydrophobic surfaces, the surface protrusions are formed by complex fractal shapes. For this reason, there is the problem that the individual protrusions are brittle and can be destroyed with little force, so that the hydrophobic properties are soon lost.

Furthermore, it is believed that when the super-hydrophobic substrates according to the conventional technologies are used as a glass sheet for vehicles, most of rain drops are removed from the window surface to obtain a clear view. However, since the manufacturing methods are complicated, there is no example in which the conventional substrate is used as an actual glass sheet for vehicles and there is no example that exhibits its hydrophobic property in actual use for a glass sheet for vehicles.

### Disclosure of Invention

Therefore, it is an object of the present invention to provide a super-hydrophobic substrate that has a novel surface structure exhibiting greater contact angle and smaller tumbling angle for water droplets.

The present invention provides a super-hydrophobic substrate that includes a substrate; an undercoating film formed on the substrate in which minute recesses and protrusions are formed in its surface; and a hydrophobic film formed on the minute recesses and protrusions of the undercoating film. The surface shape of the hydrophobic film reflects the minute recesses and protrusions, and a contact angle CA and a tumbling angle TA of a water droplet on the surface of the hydrophobic film satisfy the following relationships.
CA ≥ 150° and TA ≤ 15°, or 150° > CA ≥ 145° and TA ≤ 5°

### Brief Description of Drawings

FIG. 1 is a diagram showing a relationship between the contact angle and the tumbling angle.
FIG. 2A to FIG. 2D are schematic views describing the mechanism through which the minute recesses and projections are formed.
FIG. 3 is a diagram showing a glass sheet coated with a hydrophobic film obtained in Example 1 as observed by a scanning electron microscope (SEM).
FIG. 4 is a diagram showing a glass sheet coated with a hydrophobic film obtained in Example 5 as observed by a SEM.

### Preferred Embodiments of the Invention

In the super-hydrophobic substrate according to the present invention, it is preferable that the CA and TA satisfy: CA ≥ 150° and TA ≤ 7°. The undercoating film preferably contains silicon oxide as its main component.

In a preferred embodiment, the surface shape of the hydrophobic film is composed of granular projections and columnar projections that are higher than the granular projections when measured from the surface of the substrate. In this case, when Dc is the diameter of the columnar projections and H is their height, Dc and H preferably satisfy: 2Dc ≤ H, more preferably 3Dc ≤ H.

It is preferable that a surface roughness of the hydrophobic film expressed as an arithmetic mean roughness value (Ra) is 10 nm or more, and a haze value (ratio) of the film is 1% or less. One of the reasons why a certain amount of surface roughness is realized while maintaining a low haze value, that is, while maintaining high transparency, is that a surface shape of the hydrophobic film reflects a minute texture of the undercoating film to provide the surface shape with a characteristic structure in which columnar projections are scattered among granular projections.

The hydrophobic film may be, for example, a fluoroalkyl group-containing organic film. As the substrate, various materials such as glass, resin and metal can be used, and the substrate may be a laminated glass or a tempered glass. These glass sheets can be used for vehicles, for example, a laminated glass is used as a windshield. Since the hydrophobic film of the present invention can be formed without sintering, the film is suitable for a processed glass such as a laminated glass.

In the present invention, the relationship between the contact angle and the tumbling angle is restricted. The inventor manufactured windshields having various combinations between contact angles and tumbling angles by the same method as in the present invention, and conducted visual sensory testing by four people of Mr. A, Mr. B, Mr. C, and Mr. D. This testing was based on visibility of the windshields on which water droplets were scattered.

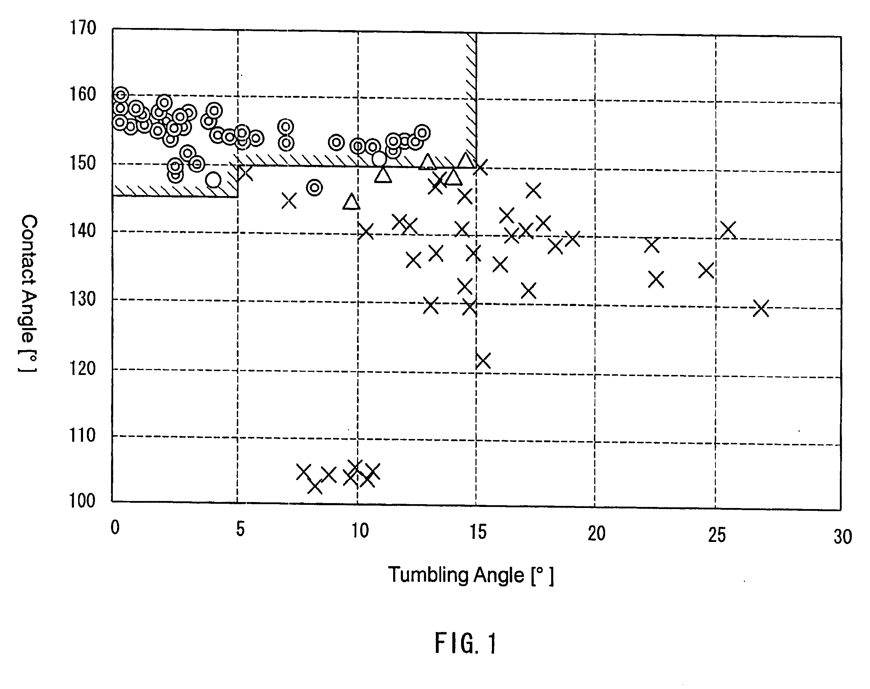

The results are shown in FIG. 1. Broadly, in FIG. 1, the range of 145° or more in contact angle and the range of 15° or less in tumbling angle can be regarded as a good visibility region, and the range of more than 5° in tumbling angle may be regarded as a poor visibility region.

The result indicates that the range of contact angle (CA) ≥ 150° and tumbling angle (TA) ≤ 15° can provide good visibility, and the range of CA ≥ 150° and TA ≤ 7° is more preferable. The range of 150° > contact angle (CA) ≥ 145° and tumbling angle (TA) ≤ 5° also can provide good visibility.

When the relationship between the contact angle and the tumbling angle in the super-hydrophobic substrate satisfies the above condition, the substrate exhibits a good fall property for water droplets. Such a super-hydrophobic substrate can be obtained by forming a hydrophobic film containing fluoroalkyl groups on minute recesses and projections that are formed on a substrate surface.

In this description, the contact angle is determined by measuring a contact angle of a 4 µL water droplet on a horizontal surface. The tumbling angle is determined by measuring a critical angle of a 50 µL water droplet so that the water droplet tumbles from the surface.

The surface shape of the undercoating film that is preferable for super-hydrophobicity can be achieved by mixing granular projections and columnar projections. The surface of the hydrophobic surface preferably reflects this undercoat surface shape so that the surface of the hydrophobic film also has a mixture structure of granular projections and columnar projections. The structure easily holds air between a water droplet and the surface.

Preferred surface shapes of the hydrophobic film will be described below. The columnar projections in the surface may be formed in single units, that is, integrated projections formed by irregular growth of minute particles in the thickness direction of the film. The columnar projections may be formed by stacking microparticles on one another. There are no particular limitations with respect to the number and the configuration of the stacked microparticles. However, it is preferable that the projections formed by stacking two or more microparticles in the thickness direction of the film protrude from the periphery, and more specifically, it is preferable that the columnar projections are contiguous bodies constituted by three or more microparticles in the thickness direction of the film, and whose periphery is surrounded by minute projections that in principle are the height of a single microparticle layer.

When Dc is the diameter of the columnar projections and H is their height, Dc and H preferably satisfy: 2Dc ≤ H and more preferably 3Dc ≤ H. Here, values that are measured by SEM may be used for Dc and H. Dc is preferably 10 nm to 200 nm, and the preferable range of H is normally 50 nm or more, although this depends on the value of Dc. When H is smaller than 50 nm, it is difficult to obtain super-hydrophobicity.

The hydrophobic film may include integral projections and projections formed by stacking microparticles.

In this film, there are minute projections (granular projections) around the columnar projections. The diameter Dp of the minute projections is preferably 5 nm to 200 nm.

To achieve the above-described surface shape, a hydrophobic film forming solution should be applied while avoiding a mechanical contact with the undercoating film, so that the minute recesses and projections of the undercoating film are not destroyed. The mechanical contact means a direct contact between the device for applying the solution and the film. The minute projections are easily destroyed, especially immediately after their formation. However, even if the stress to the film surface destroys the columnar projections, granular projections are hardly damaged. Thus, the structure is superior in durability (abrasion resistance) to conventional super-hydrophobic articles.

As explained above, there are two shapes of columnar projections. Their shape depends on the film-formation conditions. The high solute concentration in the solution tends to cause a shape of stacking particles, for example.

Since the columnar projections are allowed to grow naturally, the projections do not necessarily grow only perpendicular to the substrate surface, and there are also those that bend at an intermediate portion thereof in the lateral direction or those that grow obliquely from the start. However, projections formed in this manner do not result in problems.

With conventional technologies, methods often employed were forming a flat surface first and then carrying out plasma processing, warm-water processing, or high temperature sintering to form recesses and projections in the surface. With these methods, however, not only were equipment costs expensive but there was also a limitation as to the substrate in which the recesses and projections were formed. For example, these methods were substantially impossible to adopt for glass sheets attached to a vehicle body.

On the other hand, according to the present invention, a coating solution is applied to a substrate surface and that solution is dried without sintering, and thus the substrate is not restricted.

The surface roughness of the film has an arithmetic mean roughness value (Ra) of preferably at least 10 nm, and the haze value of the film is preferably 1.0% or less and even more preferably 0.5% or less.

The greater the surface roughness is, the more the hydrophobicity can be increased. Uneven surfaces formed through conventional technologies had the problem that the haze value increased as the surface roughness increased, making it difficult to achieve both transparency and hydrophobicity.

It is preferable that the diameter Dp of the minute projections is 200 nm or less and its average is 20 to 100 nm. As for the columnar projections, the diameter Dc should be 200 nm or less and its average is 20 to 100 nm so as to reduce the haze value.

To form an undercoating film, the solution including a chlorosilyl-group containing compound as a solute is suitable.

The chlorosilyl-group containing compound should hold a chlorosilyl group in a nonaqueous solvent, and reacts with a hydrophilic group (-OH group) on a substrate surface to release hydrogen chloride and to be absorbed on the surface, when the solution is applied onto the substrate surface. When the solution is held on the surface substrate, the moisture in the air and the chlorosilyl group react to release hydrogen chloride and to generate a silanol group (-Si-OH).

It is expected that the chlorosilyl-group containing compound and the silanol-group containing compound would be absorbed alternately and layered naturally on a substrate surface while reacting and releasing hydrogen chloride.

The nonaqueous solvent for dissolving a chlorosilyl-group containing compound can be a solvent containing silicone oil as its main component.

As a preliminary investigation, a chlorosilyl-group containing compound in isoparaffin based solvent, which is an example of the solvents whose main component is not silicone oil, was dissolved, and the solution was applied onto a substrate surface. Then, the film obtained had minute recesses and projections somewhat, but was free from a columnar projection. When a hydrophobic film was formed on this film, super-hydrophobicity was not observed, although usual hydrophobicity was observed. It is believed that the water-absorptivity of the nonaqueous solvents caused the difference.

Moisture also influences the reaction of forming a film with minute recesses and projections, and thus, first, the influence of the humidity during the reaction was investigated. The application step of the solution for forming an undercoating film was conducted in a low humidity atmosphere of, for example, temperature = 20°C and relative humidity RH = 10%. Then, the undercoating film obtained had granular projections, but was free from a columnar projection.

When the solution for forming an undercoating film is applied onto the substrate surface, the moisture in the air and the chlorosilyl group are reacted to release hydrogen chloride and generate a silanol (-Si-OH). However, when the application step is conducted in a low humidity atmosphere, the moisture necessary to promote the reaction of releasing hydrogen chloride is not supplied sufficiently. Thus, granular projections are formed and columnar projections of layered granular projections are not formed.

Next, the influence of the water included in the coating solution was investigated. After the moisture was absorbed in the solvent containing silicone oil as its main component, the solution including a chlorosilyl-group containing compound with the solvent was applied onto a substrate surface. As a result, the silica film obtained had granular projections, but was free from a columnar projection.

This solvent had a water content ratio of 0.035 mass%, and then it was found that the water content ratio of the solvent was preferably 0.03 mass% or smaller.

The moisture absorbed in the solvent in advance promotes the reaction between the moisture in the solution and the chlorosilyl group before the solution is applied. This inhibits the oligomers from precipitating on the substrate surface from the solution, and thus granular projections are formed, whereas columnar projections of layered granular projections are not formed.

Considering the circumstances mentioned above, it is believed that when a chlorosilyl-group containing compound is dissolved in a nonaqueous solvent, preferably in a solvent containing silicone oil as its main component, that has a low water content ratio and then the solution is applied onto a substrate surface, the solution absorbs the moisture in the air adequately through the application and for the time of the surface being wet, and granular and columnar projections are formed.

It is preferable that after applying the solution onto a substrate surface, the substrate surface is wet with the solution for at least one second, preferably at least one minute, so as to let the substrate surface absorb the chlorosilyl-group containing compounds naturally or to let the compounds stack on the surface.

When the substrate surface is wetted for a short time only, the chlorosilyl-group containing compound is not adequately adsorbed to the substrate surface, and thus a film having a structure of minute recesses and projections that confers super hydrophobicity cannot be obtained.

Also, in order to supply an additional amount of the chlorosilyl-group containing compound, which naturally adsorbs to and forms layers on the substrate surface, the same solution may be applied a second time after it has been applied to the substrate surface for a first time and preferably before the solution has dried completely.

The concentration of the chlorosilyl-group containing compound is preferably 0.01 to 10 mass% and more preferably 0.1 to 3 mass%, although this also differs depending on the application method.

When the concentration of the chlorosilyl-group containing compound is too high, the film becomes thick and turns into a white powder, and this is not preferable. On the other hand, when the concentration of the chlorosilyl-group containing compound is too low, the film does not have adequate thickness. As a result, a structure of minute recesses and projections that confers super hydrophobicity cannot be formed, and thus this is not preferable.

The mechanism of the formation of the film that has minute recesses and projections will be explained, taking the solution that includes a solvent containing silicone oil as its main component and a chlorosilyl-group containing compound dissolved therein as an example.

In the solution, the chlorosilyl-group containing compound is dissolved in the solvent holding the chlorosilyl group.

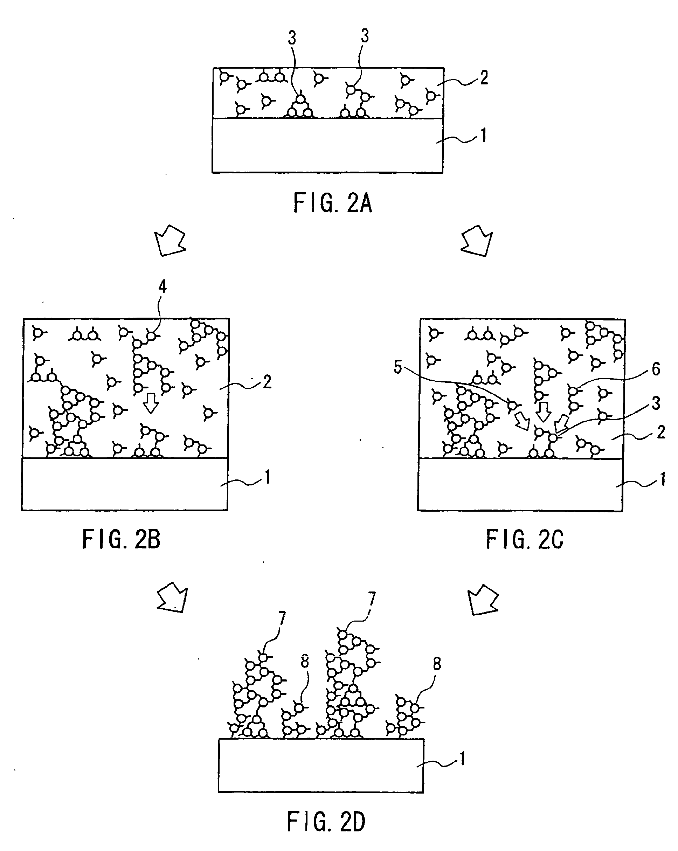

When this solution 2 is applied to the surface of a substrate 1, the chlorosilyl-group containing compounds bind to the hydrophilic groups (-OH groups) of the substrate surface during application. Moreover, the chlorosilyl-group containing compounds bind to the substrate surface after undergoing hydrolysis and condensation polymerization due to the moisture in the air and the moisture adsorbed to the substrate surface. In this way, granular seeds 3 are formed scattered over the substrate surface (see FIG. 2A).

Then, when the substrate surface is kept wetted by the solution, the chlorosilyl-group containing compounds proceed from hydrolysis with the moisture in the air to a condensation reaction, generating oligomers of silicon oxide. Once these oligomers have grown to a size where they do not dissolve in the solvent, they start to precipitate out of the solvent, and the oligomers 4 that have precipitated accumulate and grow as projections (FIG. 2B).

Also, when a silanol (Si-OH group) is formed on the surface of the seeds 3 formed on the substrate surface, it binds the chlorosilyl-group containing compounds 5. The oligomers 6 also bind the Si-Cl or Si-OH groups on the surface with recesses and projections before precipitating, and projections are grown from the surface as well (FIG. 2C).

Due to the sedimentation processes shown in FIG. 2B and FIG. 2C, granular projections 8 and columnar projections 7 are formed on the surface of the substrate 1 (FIG. 2D).

Since projections grow easily at spots that protrude from the substrate surface, most likely the growth of the columnar projections is concentrated at the seeds that are formed immediately after application.

It is likely that the difference between the projections grown from the substrate surface and formed in a single unit and the projections that are formed as grains pile on one another is due to the ratio of the amount of precipitated oligomers that are accumulated and the amount of dissolved raw material that precipitates directly onto the substrate surface, and on the density of the seeds that are formed immediately after application.

With respect to the application method, it is necessary that the application solution wets the substrate surface evenly. Specific examples of the application method include a flow coating method, a dip coating method, a curtain coating method, a spin coating method, a spray coating method, a bar coating method, and an immersion and adsorption method. Of these methods, a flow coating method and a spray coating method are preferable because they allow efficient application.

The chlorosilyl-group containing compound for the present invention is a compound that includes at least one chlorosilyl group (-SiClₙX₃₋ₙ, where n is 1, 2, or 3, and X is hydrogen or an alkyl group, alkoxyl group, or acyloxy group with a carbon number of 1 to 10) within the molecule.

Of these, a compound that includes at least two chlorine atoms is preferable, and a chlorosilane in which at least two of the hydrogen atoms of silane SiₙH₂ₙ₊₂ (wherein n is an integer of 1 to 5) are substituted with chlorine atoms and the other hydrogen atoms are substituted with an alkyl group, an alkoxyl group, or an acyloxy group where necessary, and partial hydrolyzates and condensates thereof, are preferable.

Possible examples thereof include tetrachlorosilane (SiCl₄), trichlorosilane (SiHCl₃), trichloromonomethylsilane (SiCH₃Cl₃), dichlorosilane (SiH₂Cl₂), and Cl-(SiCl₂O)n-SiCl₃ (wherein n is an integer of 1 to 10). Any of these may be used alone or a plurality thereof may be used in combination, but the most preferable chlorosilyl-group containing compound is tetrachlorosilane.

The solvent having silicone oil as its main component is preferably acyclic and/or cyclic dimethyl silicone oil. Examples thereof include hexamethyldisiloxane, octamethyltrisiloxane, decamethyltetrasiloxane, octamethylcyclotetrasiloxane, and decamethylcyclopentasiloxane. These may be used alone or a plurality thereof may be used in combination.

The environment for the application process is preferably a temperature of 10°C to 40°C and a relative humidity (RH) of 15% to 60%, and more preferably is a temperature of 15°C to 25°C and a relative humidity (RH) of 20% to 40%. Columnar projections are not formed when the temperature and the humidity are too low.

On the other hand, when the humidity is too high, the projections become massive, lowering the transparency of the formed film. Also, when the temperature is too high, the solution that is applied to the substrate surface dries too quickly, making it difficult to keep the substrate surface in a wetted state for a predetermined term.

There are no particular limitations with respect to the application solution for forming a hydrophobic film as long as it includes a hydrophobic material that can bind to the substrate surface. This solution can be prepared by dissolving the hydrophobic material in solvent.

Examples of a hydrophobic group that exhibits hydrophobicity include a fluoroalkyl group or an alkyl group. The hydrophobic material is preferably a silane compound that includes a fluoroalkyl group or an alkyl group and that includes a hydrolysable group that matches well with the chlorosilyl group formed in advance on the substrate surface. Examples of the hydrolysable group include an alkoxyl group, an acyloxy group, and a chlorine group. For silane compounds including the hydrolysable group, it is possible to use hydrolyzates that are partially hydrolyzed and polymers that have been polymerized by condensation. Of these, a silane compound including a fluoroalkyl group, which has excellent hydrophobicity, is especially preferable.

Examples of the fluoroalkyl group-containing silane compounds include silane compounds that contain a fluoroalkyl group and that also contain an alkoxyl group, an acyloxy group, or a chlorine group. Possible examples include CF₃(CF₂)₇(CH₂)₂Si(OCH₃)₃, CF₃(CF₂)₅(CH₂)₂Si(OCH₃)₃, CF₃(CF₂)₇(CH₂)₂SiCl₃, and CF₃(CF₂)₅(CH₂)₂SiCl₃.

Any of these can be used alone or a plurality thereof can be used in combination. CF₃(CF₂)₇(CH₂)₂SiCl₃ is most preferable because of its particularly high reactivity and hydrophobicity.

There are no particular limitations with respect to the solvent in which the hydrophobic material is dissolved. However, a chlorosilyl-group containing compound that is formed on the substrate first is applied by being dissolved in a solvent having silicone oil as its main component, and thus the hydrophobic agent that is applied afterwards is preferably a nonaqueous solvent, which belongs to the same group.

Examples of the nonaqueous solvent include paraffin-based hydrocarbons, flon-based solvents, and solvents containing silicone oil as their main component. Of these, solvents containing silicone oil as their main component are preferable because such solvents are the same as the solvent in which the chlorosilyl group containing compound that is formed on the substrate surface first is dissolved.

With regard to the method for applying the solution (hydrophobic solution), it is necessary that the surface structure of the film with recesses and projections formed first is not destroyed. More specifically, it is preferable that the hydrophobic solution is adsorbed in the same manner as the chlorosilyl-group containing compound that is formed first. To adsorb the hydrophobic solution, it is necessary for the substrate surface to be wetted with the hydrophobic solution for at least 0.1 seconds after the hydrophobic solution is applied.

The hydrophobic solution should be applied in a thickness such that the hydrophobic film reflects the minute recesses and projections of the undercoating film. It is sufficient that a single layer of the hydrophobic material is bonded, unlike the chlorosilyl-group containing compound of the film with recesses and projections that is formed first, and thus the period during which the substrate is wetted with the hydrophobic solution can be shorter than the period during which the chlorosilyl-group containing compound is allowed to adhere naturally to and form layers on the substrate surface. However, when this period is less than 0.1 seconds, the hydrophobic material is not adequately adsorbed, and thus suitable hydrophobicity cannot be exhibited.

With respect to the method for its application, the solution for forming the functional film may be applied avoiding mechanical contact with the undercoating film, so that the minute recesses and projections of the undercoating film formed first are not destroyed. More specifically, the method can be a flow coating method, a dip coating method, a curtain coating method, a spin coating method, a spray coating method, a bar coating method, and an immersion and adsorption method. Of these methods, a flow coating method and a spray coating method are preferable because they allow efficient application.

Examples of materials for the substrate include glass and resin, and transparent materials are preferable. It is preferable that a material having hydrophilic groups in its surface is used. Specific examples of the substrate include a glass substrate, a resin substrate, and a resin film. Mirrors for vehicles also can be used for the substrate.

If there are few hydrophilic groups on the surface of the substrates, then the surface may be made hydrophilic by processing it in advance in a plasma or corona atmosphere including oxygen. Alternatively, the solution may be applied after the substrate surface has been provided with hydrophilicity by irradiating ultraviolet radiation of a wavelength around 200 to 300 nm in an oxygen-containing atmosphere.

The super-hydrophobic film can be formed by applying a coating solution to a substrate surface and drying it at a room temperature, and thus the film can be formed on any kind of substrates. It is possible to adopt the present invention for a transparent glass sheet attached to a vehicle body.

Alternatively, the super-hydrophobic film may be formed on a resin film by the present invention, and then the film may be attached to the transparent glass sheet.

### Examples

In the following description, "silica" does not strictly refer to objects in the state of SiO₂, and is used simply to mean silicon oxides.

### [Formation of a Hydrophobic Film]

### Example 1

While stirring, 0.5 g of tetrachlorosilane (SiCl₄; made by Shin-Etsu Silicones) was added to 99.5 g of decamethylcyclopentasiloxane (KF-995; made by Shin-Etsu Silicones), yielding a coating solution for forming an undercoating film with minute recesses and projections whose main component is silica.

While stirring, 2 g of heptadecafluorodecyltrichlorosilane (CF₃(CF₂)₇(CH₂)₂SiCl₃) were added to 98 g of decamethylcyclopentasiloxane, yielding a hydrophobicity providing agent.

The coating solution for forming an undercoating film was applied onto the surface of a washed windshield glass for automobiles at a relative humidity of 30% and at room temperature using flow coating, and for a period of one minute the glass surface was allowed to sit, being wetted by this solution. The same solution was then applied a second time using flow coating, and for a period of one minute the glass surface wetted by this solution was allowed to sit.

Then, the hydrophobicity providing agent was applied onto the glass surface using flow coating when the glass surface was still wet with the coating solution for forming an undercoating film, and for a period of one minute the glass surface wetted by the agent was allowed to sit. The agent was completely washed away with ethanol and drying was allowed to occur naturally, yielding a windshield glass provided with hydrophobicity.

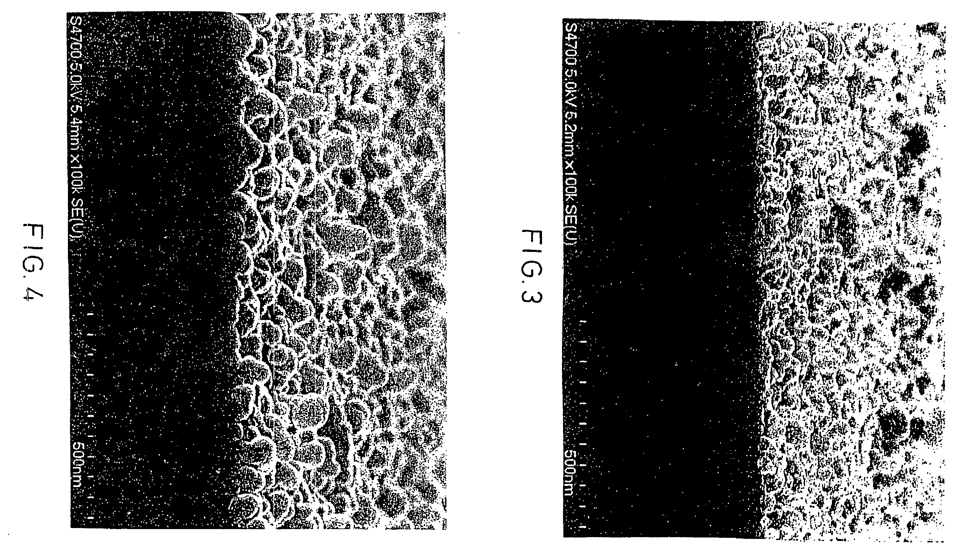

The surface configuration of the windshield glass provided with hydrophobicity that was obtained in this manner was observed using a scanning electron microscope (SEM) "S-4700 model" manufactured by Hitachi Seisakusho Inc., under the following conditions: acceleration voltage of 5 kV, emission current of 10 µA, slope angle of 10°, zoom factor of 100,000 times magnification. The result is shown in FIG. 3. It is clear from the result that minute granular projections and columnar projections were formed in the surface of the hydrophobic film.

Fig. 3 indicates that the columnar projections are constituted by microparticles grown irregularly in the film thickness direction of the film, and more specifically has a shape in which they grow to two or three times or more the average height of the minute projections made of microparticles. The columnar projections were formed on less than half the area of the overall region, and the remainder was covered by minute projections. The height H of some of the columnar projections from the substrate surface was found to be at least three times their average diameter Dc. H, Dc, and the diameter Dp of the minute projections were within the above-mentioned preferable range. The average values of Dp and Dc were both within the range of 20 nm to 100 nm.

With respect to the surface roughness of the windshield glass provided with hydrophobicity, the arithmetic mean roughness value Ra was measured using an atomic force microscope (AFM), "SPI3700" manufactured by Seiko Instruments Inc., in cyclic contact mode. The larger the value of the Ra is, the greater the unevenness of the film surface is.

The hydrophobicity of the windshield glass provided with hydrophobicity was evaluated through the contact angle and the tumbling angle of water. Using a contact angle meter "CA-DT" made by Kyowa Interface Science Co., Ltd., a 4 µL water droplet was dropped onto the surface of the glass substrate, and the passive contact angle was measured. The smaller the value of the contact angle is, the greater the hydrophilicity is.

With respect to the tumbling angle, an angle of the glass was measured when a 50µL water droplet started to tumble on the surface. The water droplet was dropped on the horizontal surface, and then the surface was gradually tilted. The smaller the value of the tumbling angle is, the more easily water droplets tumble down and the less they tend to remain on the surface.

The transparency of the windshield glass provided with hydrophobicity was evaluated using the haze value. The haze value was measured using a direct reading haze computer "HGM-2DM" manufactured by Suga Test Instruments Co., Ltd. The smaller the haze value is, the higher the transparency of the film is.

Further, the abrasion resistance of the film of the windshield glass provided with hydrophobicity were evaluated. To test the abrasion resistance, a dry towel was attached to a reciprocating abrasion tester (manufactured by Shinto Scientific Co., Ltd.), and with a load of 125 g/cm², the glasses provided with hydrophobicity were slid back and forth 100 times and then the contact angle of water on the glass provided with hydrophobicity was measured.

Further, visibility of the windshield glass provided with hydrophobicity that was attached to the vehicle body in a light rain was evaluated by a visual check. Since a super-hydrophobic glass surface repels rain drops that fall onto the surface, the rain drops hardly remain on the surface so that good visibility can be kept. In this connection, good visibility where rain drops hardly remain is indicated by "O" and poor visibility where rain drops remain is indicated by "×".

### Example 2

A solution for forming an undercoating film with minute recesses and projections that was prepared in the same manner as in *Example 1* was applied onto the surface of a washed windshield glass at a relative humidity of 30% and at room temperature using flow coating, and for a period of one second the glass surface was allowed to sit, being wetted by this solution. Then, the hydrophobicity providing agent was applied onto the glass surface using flow coating when the glass surface was still wet with the coating solution, and for a period of one minute the glass surface wetted by the agent was allowed to sit. The agent was completely washed away with ethanol and drying was allowed to occur naturally, yielding a windshield glass provided with hydrophobicity.

### Example 3

A solution for forming an undercoating film with minute recesses and projections that was prepared in the same manner as in *Example 1* was applied onto the surface of a washed windshield glass at a relative humidity of 30% and at room temperature using flow coating, and for a period of 10 seconds the glass surface was allowed to sit, being wetted by this solution. Then, the hydrophobicity providing agent was applied onto the glass surface using flow coating when the glass surface was still wet with the coating solution, and for a period of one minute the glass surface wetted by the agent was allowed to sit. The agent was completely washed away with ethanol and drying was allowed to occur naturally, yielding a windshield glass provided with hydrophobicity.

### Example 4

While stirring, 0.2 g of tetrachlorosilane (SiCl₄; made by Shin-Etsu Silicones) was added to 99.8 g of decamethylcyclopentasiloxane (KF-995; made by Shin-Etsu Silicones), yielding a coating solution for forming an undercoating film with minute recesses and projections whose main component is silica.

The coating solution for forming an undercoating film was applied onto the surface of a washed windshield glass for automobiles at a relative humidity of 30% and at room temperature using flow coating, and for a period of one minute the glass surface was allowed to sit, being wetted by this solution. Then, the hydrophobicity providing agent was applied onto the glass surface using flow coating when the glass surface was still wet with the coating solution for forming an undercoating film, and for a period of one minute the glass surface wetted by this solution was allowed to sit. The agent was completely washed away with ethanol and drying was allowed to occur naturally, yielding a windshield glass provided with hydrophobicity.

### Example 5

While stirring, 0.2 g of tetrachlorosilane (SiCl₄; made by Shin-Etsu Silicones) was added to 99.8 g of decamethylcyclopentasiloxane (KF-995; made by Shin-Etsu Silicones), yielding a coating solution for forming an undercoating film with minute recesses and projections whose main component is silica.

The coating solution for forming an undercoating film was applied onto the surface of a washed windshield glass for automobiles at a relative humidity of 30% and at room temperature using flow coating, and for a period of five minutes the glass surface was allowed to sit, being wetted by this solution. The same solution was then applied a second time using flow coating, and for a period of five minutes the glass surface was allowed to sit, wetted by this solution.

Then, the hydrophobicity providing agent, which was prepared in the same manner as in *Example 1*, was applied onto the glass surface using flow coating when the glass surface was still wet with the coating solution for forming an undercoating film, and for a period of one minute the glass surface wetted by this solution was allowed to sit. The agent was completely washed away with ethanol and drying was allowed to occur naturally, yielding a windshield glass provided with hydrophobicity.

The surface configuration of the glass sheet provided with hydrophobicity that was obtained in this manner was observed using a scanning electron microscope under the same conditions as in *Example 1* (see FIG. 5). In Example 5, the columnar projections are constituted by stacked microparticles. The columnar projections include projections made of three or more microparticles that are stacked locally and protrude from the surrounding particles as a protrusion of two or more stacked microparticles.

The columnar projections were formed on less than half the area of the overall region, and the remainder was covered by minute projections. The height H of some of the columnar projections from the substrate surface was found to be at least three times their average diameter Dc. H, Dc, and the diameter Dp of the minute projections were within the above-mentioned preferable range. The average value of Dp and Dc were both within the range of 20 nm to 100 nm.

### Example 6

A windshield glass provided with hydrophobicity was obtained in the same manner as in *Example 1* except that the humidity during the application of the coating solution for forming an undercoating film that was prepared in the same manner as in *Example 1* was changed to 15%.

### Example 7

A windshield glass provided with hydrophobicity was obtained in the same manner as in *Example 1* except that the coating solution for forming an undercoating film that was prepared in the same manner as in *Example 1* was applied on a windshield glass that was attached to a automobile body.

In evaluations using a scanning electron microscope, granular and columnar projections were observed on the films of all the windshield glass obtained in *Examples 1 to 7*.

In evaluations using an atomic force microscope, Ra in all the films is 10 nm or more and the films had large surface roughness.

Table 1 shows the following properties in *Examples 1 to 7*: Surface roughness, Initial water repellency (contact/tumbling angle), Contact angle after abrasion test, Haze value, and Visibility in a light rain.

**(Table 1)**

| Ex. No. | Surface roughness (Ra) | Initial water repellency (contact angle / tumbling angle) (°) | Contact angle after abrasion test(°) | Haze value (%) | Visibility in a light rain |
|---|---|---|---|---|---|
| 1 | 17 nm | 159 / 0.3 | 114 | 0.2 | O |
| 2 | 15 nm | 157/2.8 | 108 | 0.1 | O |
| 3 | 16 nm | 158/4.1 | 108 | 0.2 | O |
| 4 | 14 nm | 153/11.5 | 107 | 0.1 | O |
| 5 | 22 nm | 156/1.0 | 112 | 0.3 | O |
| 6 | 14 nm | 148/2.5 | 111 | 0.1 | O |
| 7 | 18 nm | 157/0.3 | 107 | 0.2 | O |

The windshield glass provided with hydrophobicity obtained in *Examples 1 to 7* satisfied the following relationships: CA ≥ 150° and TA ≤ 15°; or 150° > CA ≥ 145° and TA ≤ 5°, where CA is a contact angle and TA is a tumbling angle.

The contact angles after the abrasion test were at least 100°, exhibiting normal hydrophobicity, which indicated that excellent abrasion resistance was provided, although it did not reach super-hydrophobicity. The haze values were no greater than 1.0%, exhibiting high transparency, and the transparent color tones and reflect color tones were neutral, indicating that there were no problems in appearance. Further, in a light rain, water droplets hardly remained on the windshields provided with hydrophobicity that were attached to an actual automobile, and excellent visibility was provided.

The reflection from the windshields provided with hydrophobicity obtained in *Examples 1 to 7* was suppressed. It is believed that it was caused by the low refractive index of the undercoating film containing silica as its main component and the roughness of the film surface.

### Comparative Example 1

A windshield glass provided with hydrophobicity was obtained in the same manner as in *Example 4* except that the period was changed from one minute to one second, for which the glass surface was allowed to sit in a wet state with a coating solution for forming an undercoating film that was prepared in the same manner as in *Example 4*.

The windshield glass provided with hydrophobicity that was obtained in this manner was evaluated in the same manned as in *Examples* *1 to 7*. The initial contact angle was 142° and the initial tumbling angle was 17.8°, which indicates that it is inferior in water repellency. In a light rain, water droplets remained on the surface of the windshield that was attached to an actual automobile body, exhibiting poor visibility.

### Comparative Example 2

While stirring, 4.0 g of tetrachlorosilane (SiCl₄; made by Shin-Etsu Silicones) was added to 96.0 g of decamethylcyclopentasiloxane (KF-995; made by Shin-Etsu Silicones), yielding a coating solution for forming an undercoating film with minute recesses and projections.

The coating solution for forming the undercoating film was applied onto the surface of a washed windshield glass for automobiles at a relative humidity of 30% and at room temperature using flow coating, and for a period of five minutes the glass surface was allowed to sit, being wetted by this solution. Then, the hydrophobicity providing agent that was prepared in the same manner as in *Example 1* was applied onto the glass surface using flow coating when the glass surface was still wet with the coating solution for forming an undercoating film, and for a period of one minute the glass surface wetted by this solution was allowed to sit. The agent was completely washed away with ethanol and drying was allowed to occur naturally, yielding a windshield glass provided with hydrophobicity.

The windshield glass provided with hydrophobicity that was obtained in this manner was evaluated in the same manned as in *Examples 1 to 7*. The initial contact angle was 123° and the initial tumbling angle was 16.6°, which indicates that it is inferior in water repellency. White powder was locally observed on the film, and its haze value was 3.8%, exhibiting poor transparency. In a light rain, water droplets remained on the surface of the windshield that was attached to an actual automobile body, exhibiting poor visibility

### Comparative Example 3

A windshield glass provided with hydrophobicity was obtained in the same manner as in *Example 1* except that decamethylcyclopentasiloxane was substituted with isoparaffin based solvent (Isozol 300: made by Nippon Petrochemicals Co., Ltd.).

The windshield glass provided with hydrophobicity that was obtained in this manner was evaluated in the same manned as in *Examples 1 to 7*. The initial contact angle was 91° and the initial tumbling angle was 12.8°, which indicates that it was inferior in water repellency. In a light rain, water droplets remained on the surface of the windshield that was attached to an actual automobile body, exhibiting poor visibility.

## Claims

1. A super-hydrophobic substrate, comprising:
a substrate;
an undercoating film formed on the substrate, minute recessions and projections being formed in the undercoating film; and
a hydrophobic film formed on the minute recessions and projections,
wherein a surface shape of the hydrophobic film reflects the minute recessions and projections, and
wherein a contact angle CA and a tumbling angle TA of a water droplet on the surface of the hydrophobic film satisfy relationships:
CA ≥ 150° and TA ≤ 15°; or 150° > CA ≥ 145° and TA ≤ 5°.

2. The super-hydrophobic substrate according to claim 1, wherein the CA and TA satisfy: CA ≥ 150° and TA ≤ 7°.

3. The super-hydrophobic substrate according to claim 1, wherein the undercoating film contains silicon oxide as its main component.

4. The super-hydrophobic substrate according to claim 1, wherein the surface shape of the hydrophobic film is composed of granular projections and columnar projections, and with respect to the heights from the surface of the substrate, the columnar projections are higher than the granular projections.

5. The super-hydrophobic substrate according to claim 4, wherein a diameter Dc and a height H of the columnar projections satisfy a relationship: 2Dc ≤ H.

6. The super-hydrophobic substrate according to claim 1, wherein a surface roughness of the hydrophobic film expressed as an arithmetic mean roughness value (Ra) is at least 10 nm, and a haze value of said film is 1% or less.

7. The super-hydrophobic substrate according to claim 1, wherein the hydrophobic film is an organic film that contains a fluoroalkyl group.

8. The super-hydrophobic substrate according to claim 1, wherein the substrate is a tempered glass or a laminated glass.
